# EUROPEAN PATENT APPLICATION

(11) **EP 1 777 050 A1**
(43) Date of publication of application: **25.04.2007**
(21) Application number: 06122463.0
(22) Date of filing: 17.10.2006
(51) Int. Cl.: B29C 33/44, B29C 45/40

(54) **Plastic material moulding apparatus, in particular for moulding vehicle body parts**

(30) Priority: 18.10.2005 IT MI20051979
(71) Applicant: Ilma Plastica S.r.l., 20122 Milano (IT)
(72) Inventor: VOLPONI, Leonardo, 21025, COMERIO (IT)
(74) Representative: Jorio, Paolo

(57) **Abstract**

A plastic material moulding apparatus (1), in particular for moulding vehicle body parts, includes a mould (2) consisting of a punch (3) and a matrix (4), cooperating with each other to define a cavity (5) having the shape of a piece (6) to be moulded and movable with respect to each other; a bottom plate (7) which integrally carries a fixed body (20) of the punch (3), and an extractor element (25), supported by the bottom plate (7) and movable with respect to the bottom plate (7) and to the body (20) along a sliding direction (D); the extractor element is closed in a loop to define an extraction ring (25) arranged substantially around the fixed body (20) of the punch (3) and shaped so as not to interfere, while moving along the sliding direction (D), with the body (20).

## Description

The present invention relates to a plastic material moulding apparatus, in particular for moulding vehicle body parts.

As known, moulded plastic material components are increasingly common in the automotive sector, in particular for making body parts, such as for example bumpers, wheelhouses, spoilers, etc.

These components are usually injection moulded in moulding apparatuses which, in general terms, comprise a mould formed by a matrix and a punch carried by respective bottom plates; the punch comprises a fixed body, integrally connected to the bottom plate by means of a punch-carrier element, and parts (punch headers and internal inserts) which are movable with respect to the fixed body. To allow the extraction of the moulded piece, the apparatus comprises an extraction plate, movable with respect to the punch, which carries a plurality of movement members (bars, mechanical carriages, etc.), having very complex geometries and mechanisms, which act either on the moulded piece or on the mould inserts. The extraction plate is arranged underneath the punch and the movement members are inserted in suitable seats formed through the punch. A relatively high number of mechanical components, a relatively complex movement systems and relative large movement members are required; consequently, also the apparatus as a whole has considerable size and dimensions. The apparatuses of this type are consequently complicated (and costly) and cumbersome. The stroke required by the extraction plate, and consequently the moulding times, are relatively long. Furthermore, the overall structure of the apparatus is not very rigid, due to the presence of relatively large movement members; as a result, the quality of the moulded parts may not be fully satisfactory, especially for applications, such as indeed those of the automotive industry, in which very high quality is required.

It is an object of the present invention to provide a moulding apparatus which is free from the drawbacks of the prior art illustrated herein; in particular, it is an object of the present invention to provide a moulding apparatus which, with respect to the known solutions, is simpler and more cost-effective to construct, more compact so as to allow a reduction of moulding times, and more rigid to allow high quality of the moulded parts.

In accordance with such objects, the present invention relates to a plastic material moulding apparatus, in particular for moulding vehicle body parts, comprising a mould formed by a punch and a matrix, cooperating with each other to define a cavity having the shape of a piece to be moulded and movable with respect to each other; a bottom plate which integrally carries a fixed body of the punch; and an extractor element, supported by the bottom plate and movable with respect to the bottom plate and to the body along a sliding direction; the apparatus being characterised in that the extractor element is closed in a loop to define an extraction ring arranged substantially around the fixed body of the punch and shaped so as not to interfere, while moving along the sliding direction, with the body.

In this way, the apparatus according to the invention allows a significant reduction of the number of components and a simplified construction with respect to the known solutions; the apparatus according to the invention is therefore relatively simple and cost-effective to construct and is extremely compact and not very cumbersome, allowing, also for this reason, a significant reduction in moulding times, and it has also a high structural rigidity, which in turn allows a high moulding quality.

Further features and advantages of the present invention will be apparent in the description of the following non-limitative examples, with reference to the accompanying drawings, in which:
- figure 1 is a schematic longitudinal section view of a moulding apparatus according to the invention;
- figure 2 is a schematic cross section view of the apparatus in figure 1 ;
- figures 3 and 4 schematically show in plan view a part of the apparatus of the invention according to respective embodiments;
- figure 5 is a schematic longitudinal section view of a variation of the apparatus in figure 1.

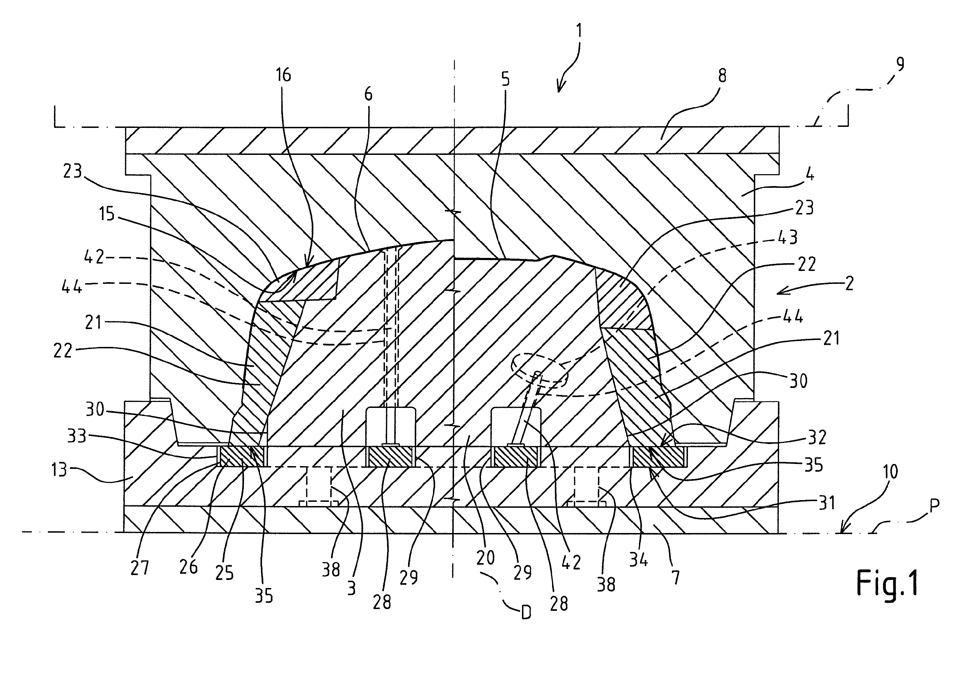

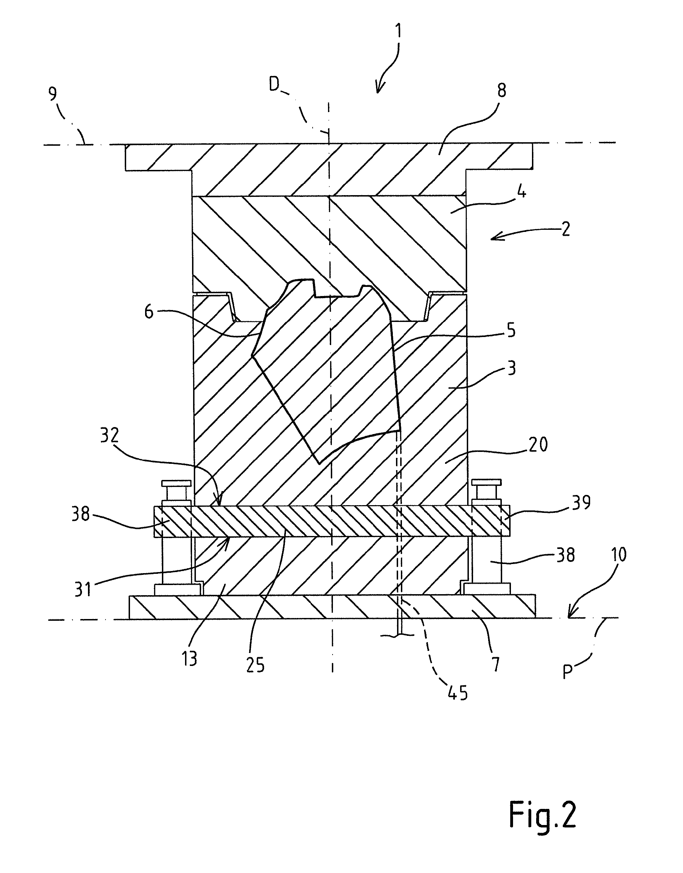

In figures 1 and 2, number 1 indicates as a whole a plastic material moulding apparatus, in the case in point an injection moulding apparatus for vehicle body parts, such as for example bumpers, spoilers, etc.

Apparatus 1 comprises a mould 2, formed by a punch 3 and a matrix 4, cooperating with each other to define a cavity 5 having the shape of a piece 6 to be moulded; punch 3 and matrix 4 are integrally connected to respective substantially flat and parallel bottom plates 7, 8, intended in use to cooperate with respective parts of a press 9 (known and not shown in detail for the sake of simplicity). In particular, bottom plate 7 rests on a surface 10 of press 9 defining a reference press-plate P.

Punch 3 is carried by a punch-carrier element 13 fixed to bottom plate 7; matrix 4 is directly fixed to bottom plate 8. Punch 3 overhangingly projects from punch-carrier element 13 and is inserted in a corresponding impression formed in matrix 4; punch 3 and matrix 4 are provided with respective moulding surfaces 15, 16 shaped so as to define cavity 5.

Punch 3 comprises a fixed body 20, integrally connected to bottom plate 7 by means of punch-carrier element 13, and parts 21 movable with respect to fixed body 20; in the non-limitative example shown in figure 1, movable parts 21 comprise a pair of headers 22 arranged at respective longitudinal ends of punch 3 and one or more inserts 23 superimposed over headers 22; it is understood that the number and shape of movable parts 21 may vary according to the shape of the piece 6 to be moulded.

Apparatus 1 also comprises an extractor element 25, supported by bottom plate 7 and movable with respect to body 20 along a sliding direction D essentially perpendicular to bottom plates 7, 8 and therefore to press-plate P; extractor element 25 is closed in a loop, i.e. is shaped as a closed loop, and therefore forms an extraction ring 25. Extraction ring 25 is essentially arranged around body 20 and is shaped so as not to interfere, while moving along sliding direction D, with body 20.

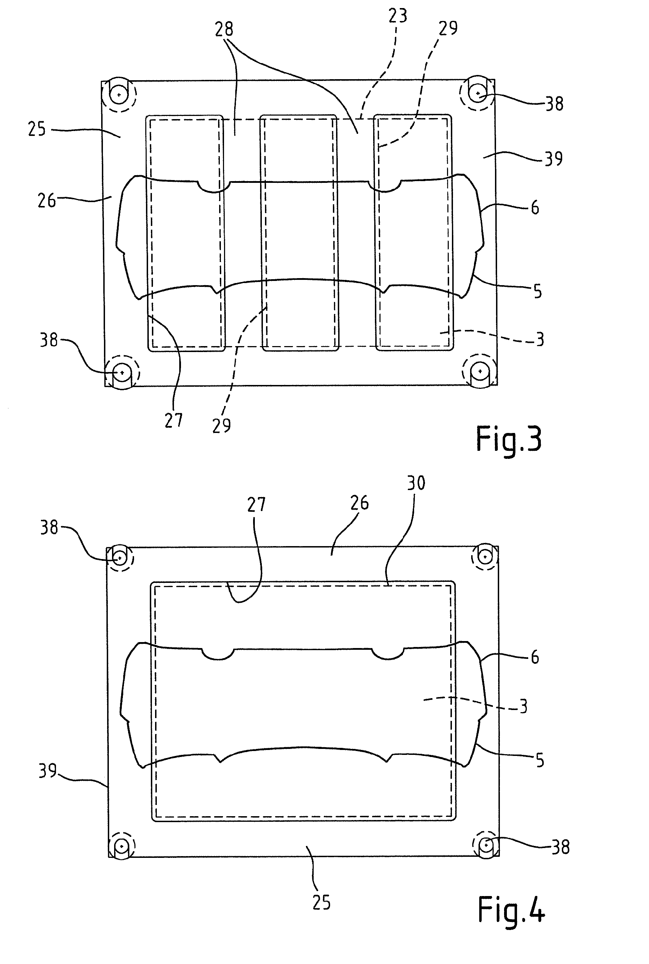

As shown in detail in figures 3 and 4, extraction ring 25 presents a frame 26, essentially rectangular in the non-limitative case in point, closed as a loop and delimiting a hollow internal region 27. In the embodiment shown in figure 1 and figure 3, extraction ring 25 is provided with internal bars 28 arranged through region 27 between opposite portions of frame 26 and defining respective partitions of region 27; extraction ring 25 therefore consists of a plurality of adjacent rings. In this case, body 20 presents recesses 29 within which bars 28 are inserted during the movement of extraction ring 25 along sliding direction D.

In the embodiment shown in figure 4, instead, extraction ring 25 is free from internal bars and frame 26 delimits a partition-free hollow internal region 27.

In all cases, body 20 is inscribed in region 27, i.e. frame 26 is arranged peripherally externally around a boundary edge 30 of body 20.

Extraction ring 25 is a substantially flat ring delimited by a pair of opposite, substantially flat and parallel faces 31, 32 which are substantially perpendicular to sliding direction D, respectively facing bottom plates 7, 8. Extraction ring 25 is housed in a seat 33 of punch-carrier element 13 and, with mould 2 closed, face 31 abuttingly rests on a surface 34 of seat 33, while face 32 abuts directly against respective surfaces 35 of headers 22.

Extraction ring 25 is moved by actuating members 38 directly cooperating with bottom plate 7 to shift extraction ring 25 with respect to bottom plate 7 along sliding direction D and parallel to press-plate P. In the example shown, actuating members 38 consists of hydraulic cylinders arranged substantially along an outer peripheral edge 39 of extraction ring 25.

Apparatus 1 also comprises movement elements 42 acting on moulded piece 6 and/or on movable inserts 43 of mould 2, and actuated by the movement of extraction ring 25. By way of example, two movement elements 42 carried by bars 28 and arranged in respective seats 44 formed through body 20, are shown extremely schematically in figure 1; movement elements 42 are moved in turn by the movement of extraction ring 25, by means of known mechanical systems not shown in detail for the sake of simplicity.

As in similar known apparatuses, apparatus 1 also comprises an injection system 45, known and only schematically shown in figure 2, for feeding plastic material into cavity 5 of mould 2 and for forming piece 6, and a mould opening system, i.e. a mechanism which separates matrix 4 from punch 3 moving bottom plates 7, 8 away from each other (also known and not shown for the sake of simplicity).

Apparatus 1 operates as follows.

With mould 2 closed and arranged in press 9, punch 3 and matrix 4 are coupled to define cavity 5; extraction ring 25 is accommodated in seat 33 and lies with face 31 resting against surface 34, while face 32 abuts against surfaces 35 of headers 22. Press 9 keeps mould 2 closed at the (relatively high) pressures required for injection moulding, which occurs in the known way.

After ending moulding, mould 2 is opened and moulded piece 6 is extracted. For this purpose, actuating members 38 move extraction ring 25 along sliding direction D and parallel to press-plate P.

Extraction ring 25 shifts rigidly and parallel to press-plate P and acts directly on headers 22 to move headers 22 and indirectly on the other movable parts of mould 2, such as inserts 23 and inserts 43, by means of headers 22 themselves and/or movement elements 42.

Piece 6 is thus detached from punch 3 and may be taken and removed from mould 2.

Moreover, it is understood that further changes and variations can be made to the apparatus described and shown herein without departing from the scope of the appended claims.

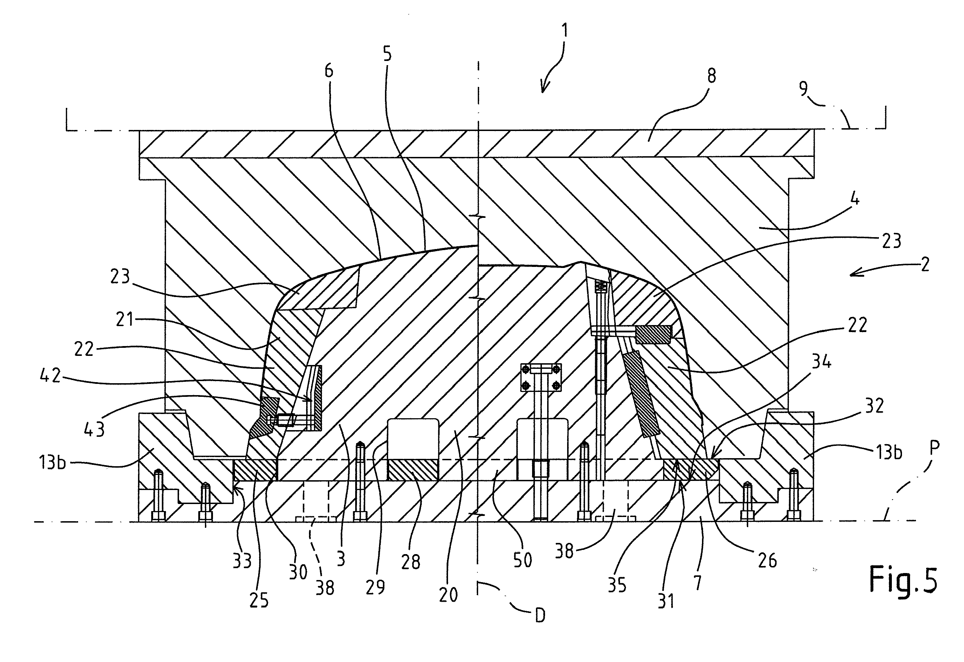

For example, the variation embodiment schematically shown in figure 5 is entirely similar to what described above, except that punch 3, instead of being carried by punch-carrier element 13, which in turn is fixed to bottom plate 7, projects directly from bottom plate 7 without the interposition of other components.

Punch 3 again comprises a fixed body 20, which is now integrally fastened directly (and not through the punch-carrier element 13) to bottom plate 7, and parts 21 (header 22 and/or inserts 23) movable with respect to fixed body 20.

Extractor element or extraction ring 25 is again supported by bottom plate 7 and movable with respect to body 20; extraction ring 25 is still arranged around body 20 and is shaped so as not to interfere with the movement of body 20. Extraction ring 25 is accommodated in a seat 33 which is made, instead of in punch-carrier element 13 as described above, on bottom plate 7 between a root portion 50 of punch 3 (and specifically of body 20) which rests and is fixed to bottom plate 7, and a matrix-contrast element 13b (which replaces punch-carrier element 13), also fixed to bottom plate 7 and arranged laterally with respect to punch 3 and abuttingly cooperating, with the mould closed, with matrix 4; in the non-limitative example shown, matrix-contrast element 13b is arranged by head with respect to punch 3, being formed by two parts positioned at respective opposite ends of punch 3 (at headers 22), but it is clear that matrix-contrast element 13b could be shaped differently.

Also in this variation, with mould 2 closed, face 31 of extraction ring 25 abuttingly rests on a surface 34 of seat 33 (the surface 34 now being a surface of bottom plate 7), while face 32 abuts directly against surfaces 35 of headers 22.

With this variation, an even more compact and lighter mould 2 and consequently an apparatus 1 are obtained.

## Claims

1. A plastic material moulding apparatus (1), in particular for moulding vehicle body parts, comprising a mould (2) formed by a punch (3) and a matrix (4), cooperating with each other to define a cavity (5) having the shape of a piece (6) to be moulded and movable with respect to each other; a bottom plate (7) which integrally carries a fixed body (20) of the punch (3); and an extractor element (25), supported by the bottom plate (7) and movable with respect to the bottom plate (7) and to the body (20) along a sliding direction (D); the apparatus being **characterised in that** the extractor element is closed in a loop to define an extraction ring (25) arranged substantially around the fixed body (20) of the punch (3) and shaped so as not to interfere, while moving along the sliding direction (D), with the body (20).

2. An apparatus according to claim 1, **characterised in that** the extraction ring (25) acts directly on movable parts (21) of the mould (2) to move said movable parts (21).

3. An apparatus according to claim 2, **characterised in that** the extraction ring (25) presents a first face (31) facing the bottom plate (7) and a second face (32), opposite to the first face (31), which directly abuts against said movable parts (21).

4. An apparatus according to one of the preceding claims, **characterised in that** the punch comprises a fixed body (20), integrally connected to the bottom plate (7), and parts (21) movable with respect to the fixed body (20); the extraction ring (25) being arranged around the fixed body (20) and cooperating directly with the movable parts (21) to move said movable parts (21).

5. An apparatus according to one of the preceding claims, **characterised by** comprising movement elements (42) acting on the moulded piece (6) and/or on movable inserts (43) of the mould (2), and actuated by the movement of the extraction ring (25).

6. An apparatus according to one of the preceding claims, **characterised in that** the extraction ring (25) is actuated by actuating members (38) cooperating directly with the bottom pate (7) to shift the extraction ring (25) with respect to the bottom plate (7) along the sliding direction (D).

7. An apparatus according to the preceding claim, **characterised in that** the actuator members (38), for example hydraulic cylinders, are arranged substantially along a peripheral edge (39) of the extraction ring (25).

8. An apparatus according to one of the preceding claims, **characterised in that** the punch (3) is integrally carried by a punch-carrier element (13) fixed to the bottom plate (7), and the extraction ring (25) is housed in a seat (33) of the punch-carrier element (13).

9. An apparatus according to one of the claims from 1 to 7, **characterised in that** the punch (3) projects directly from the bottom plate (7) and is integrally fixed directly to the bottom plate (7) without interposition of other elements.

10. An apparatus according to claim 9, **characterised in that** the extraction ring (25) is housed in a seat (33) which is formed on the bottom plate (7) between a root portion (50) of the punch (3) which rests and is fixed to the bottom plate (7), and a matrix-contrast element (13b), also fixed to the bottom plate (7) and arranged laterally side, for example by the head, with respect to the punch (3).

11. An apparatus according to one of the preceding claims, **characterised in that** the extraction ring (25) is a substantially flat ring delimited by a pair of opposite substantially flat and parallel faces (31, 32) which are substantially perpendicular to the sliding direction (D).

12. An apparatus according to one of the preceding claims, **characterised in that** the extraction ring (25) is provided with internal bars (28) and the punch (3) presents recesses (29) within which said bars (28) are inserted during the movement of the extraction ring (25) along the sliding direction (D).

13. An apparatus according to the preceding claim, **characterised in that** the bars (28) actuate movement elements (42) arranged through the punch (3) and acting on the moulded piece (6) and/or on movable inserts (43) of the mould (2).
